## Europäisches Patentamt

## European Patent Office

## Office européen des brevets

(11) Veröffentlichungsnummer: **0 287 054**

**A2**

(12) **EUROPÄISCHE PATENTANMELDUNG**

(21) Anmeldenummer: 88105866.3

(22) Anmeldetag: 13.04.88

(51) Int. Cl.4: **G01N 27/28**

(30) Priorität: 14.04.87 DE 8705520 U

(43) Veröffentlichungstag der Anmeldung:
**19.10.88 Patentblatt 88/42**

(84) Benannte Vertragsstaaten:
**AT BE CH DE ES FR GB GR IT LI LU NL SE**

(71) Anmelder: **Riemann, Werner**
**Heinrich-Heine-Strasse 26**
**D-3550 Marburg (Lahn)(DE)**

(72) Erfinder: **Riemann, Werner**
**Heinrich-Heine-Strasse 26**
**D-3550 Marburg (Lahn)(DE)**

(74) Vertreter: **Olbricht, Karl Heinrich, Dipl.-Phys.**
**Am Weinberg 15**
**D-3556 Niederweimar(DE)**

(54) **Analysevorrichtung und Messmodul hierfür.**

(57) Die Erfindung bezieht sich auf eine Vorrichtung zur Analyse von Flüssigkeiten mit wenigstens einem Modul (10), der eine Meßstrecke (14) mit einer Bezugselektrode (16) und zumindest einer Meßelektrode (18) aufweist. Auf einem Träger (80) befindliche Meßfelder (48) können auf die Meßstrecke gedrückt werden; davon abgehoben sind sie hin und her beweglich. Der länglich gestaltete Träger (80) ist entlang einer Stange (76) gleitbeweglich, die auf einer dazu parallelen, schwenkbar gelagerten Führungsschiene (74) gehalten ist. Dadurch ist der Träger (80) bei seiner Bewegung geführt, wenn er von einem Kurbeltrieb (66, 68) ergriffen wird. Eine Modulkammer (30) ist mit der Meßstrecke (14) über eine Kapillaröffnung (28) in einer flexiblen Zuleitung (26) strömungsverbunden. Zweckmäßig begrenzt die Kapillaröffnung (28) das Abfließen von Elektrolyt aus der Kammer (30) auf eine Höchstrate von 0,1 μl/24 h bei Umgebungsdruck und Raumtemperatur.

FIG. 2

## Analysevorrichtung und Meßmodul hierfür

Die vorliegende Erfindung betrifft eine Analysevorrichtung gemäß dem Oberbegriff von Anspruch 1 sowie ein Meßmodul hierfür gemäß dem Oberbegriff von Anspruch 10.

Derartige Einheiten werden unter Verwendung ionenselektiver Elektroden seit längerem in Großkliniken im Bereich der automatisierten klinischchemischen Analytik verwendet, die sich aufwendiger Geräte bedient. Beispiele sind in der DE-A-14 98 576, der GB-C-2 000 297 sowie in dem DE-U-77 18 736 beschrieben. Danach wird, etwa mit Hilfe einer Schlauchpumpe, Meßflüssigkeit durch eine Meßstrecke hindurchgesaugt, die als Bohrung ausgebildet ist und in die zwei oder mehr hintereinander angeordnete Referenz-und Meßelektroden ragen, die als elektrochemische Halbzellen selektiv auf bestimmte Ionenarten ansprechen.

Herkömmlich werden die Meßproben, also Flüssigkeiten mit organischen und anorganischen Bestandteilen, am Eingang eines Analysengerätes durch ein Ansaugröhrchen aufgenommen. Die Meß-proben werden in Probengefäßen nacheinander unter das Ansaugröhrchen geführt, das in die Meßprobe eintaucht und sie ansaugt. Nachteilig hierbei ist die Länge der Schlauch-oder Rohrverbindung zwischen der unteren Öffnung des Ansaugröhrchens und dem eigentlichen Meßort im Analysengerät, d.h. einer Meßzelle oder einem Sensor. Dies ist eine Quelle der Verunreinigung, denn selbst bei geringer Benetzbarkeit der Verbindungsmaterialien haftet ein dünner Flüssigkeitsfilm an den Wandinnen-und -außenflächen, der die nächste Meßprobe verfälscht. Der Verschleppungsfehler liegt in der Größenordnung von ±5 %. Er wächst mit der Länge der Verbindungsstrecke und ihrem Durchmesser; er nimmt ferner um so mehr zu, je stärker die Meßflüssigkeit an dem Verbindungsmaterial haftet und je größer die Konzentrationsunterschiede von aufeinanderfolgenden Meß-proben sind. Der Fehler ist bei viskosen und eiweißhaltigen Meßlösungen wie Vollblut oder Blutserum besonders groß. Das Ansaugröhrchen trägt wesentlich zur Kontamination bei, da sein unteres Ende nacheinander in alle Meßproben eintaucht und so die eingetauchte Strecke des Röhrchens sowohl von innen als auch von außen benetzt wird.

Durch eine oder mehrere Luftblasen zwischen den Meßproben und durch zwischengeschaltete Phasen mit Spül-und Reinigungslösungen wurde versucht, den Verschleppungsfehler klein zu halten. Dennoch konnten die geschilderten Schwierigkeiten bislang nur teilweise und ungenügend beseitigt werden.

Es besteht daher ein Bedürfnis daran, das Problem auf einfache und sparsame Art zu beheben.

Ein wichtiges Ziel der Erfindung ist es, ein mobiles und handliches Gerät zu entwickeln, das vor allem den Kontaminationsfehler minimiert. Es soll ferner möglichst kompakt und preisgünstig sein, damit es auch in Arztpraxen, Kleinlabors und Kliniken eingesetzt werden kann.

Hauptmerkmale der Erfindung sind im kennzeichnenden Teil der Ansprüche 1 und 10 angegeben. Ausgestaltungen sind Gegenstand der Ansprüche 2 bis 9 sowie 11 bis 20.

Erfindungsgemäß ist vorgesehen, daß an die Meßstrecke eines Meßmoduls quer zu seiner Hauptausdehnung ein Meßfelder-Träger gesteuert heranführbar sowie daran andrückbar ist und daß der Träger bei von der Meßstrecke abgehobenen Meßfeldern vor-und zurückbewegbar ist. Da die Meßstrecke in an sich bekannter Weise als Kanal oder Bohrung ausgebildet ist und eine Bezugselektrode sowie wenigstens eine Meßelektrode aufweist, ergibt sich insgesamt mit sehr bescheidenen Mitteln eine wenig aufwendige Anordnung. Das kompakt ausführbare Gerät kann infolgedessen ohne umständliche Installation an einer Vielzahl von Einsatzorten verwendet werden. Die erforderlichen Messungen lassen sich schnell und mit hoher Genauigkeit durchführen.

Das die Meßstrecke enthaltende Modul kann vorteilhaft oberhalb des Trägers überkopf zu diesem angeordnet sein, so daß die Meßfelder aufwärts bewegt werden, um mit der Meßstrecke in Berührung zu kommen. Auf diese Weise wird ein Abtropfen und Überquellen von Flüssigkeit vermieden, und die im wesentlichen waagrecht gehaltenen Meßfelder bleiben lange feucht.

Der Träger ist durch elektromechanische und/oder elektromagne-tische Mittel bewegbar. Man kann eine schrittweise Versetzung des Trägers dadurch erreichen, daß er auf einer -schwenkbaren Führungsstange gleitbeweglich angeordnet wird. Unter Verwendung eines motorischen Kurbeltriebs, dessen Mitnehmer in seitlichen Ausnehmungen des als Schlitten ausgebildeten Trägers kraft-und/oder formschlüssig eingreifen, erzielt man bei zykloidenförmiger Bewegung des Trägers jeweils den Vorschub bzw. Rückhub um den Abstand zwischen zwei benachbarten Meßfeldern. Auf dem Träger kann ein inerter Streifen abnehmbar befestigt werden, der eine Reihe von Meßfeldern aufweist und von dem ein Ende zur sicheren Mitnahme an dem Träger niedergehalten wird.

Ein außerordentlich kompakter Aufbau des für eine solche Analyse-vorrichtung vorgesehenen Meßmoduls ist gewährleistet, indem zumindest eine verschließbare Kammer vorhanden ist, die an die Meßstrecke heranreicht und über eine Kapillaröffnung mit deren Innerem in Verbindung steht. Meß-und Eichflüssigkeit können auf einfachste Weise mittels Kolbenhubpipetten in die Meßstrecke eingebracht werden, wobei durch Verwendung von Wegwerf-Pipettenspitzen die Kontamination auf ein vernachlässigbares Restmaß herabgesetzt wird. Lange und komplizierte Schlauchverbindungen sind ebenso vermieden wie Pumpen und Ventile, so daß auch die bisher nicht beherrschbaren Adhäsionsprobleme an den Innen-und Außenflächen der Verbindungsteile entfallen.

Räumlich ist es günstig, wenn die Kammer eine die Meßstrecke kreuzende, beidseitig verschlossene Bohrung ist, die insbesondere im rechten Winkel zur Meßstrecke stehen kann. Während das eine Ende bevorzugt von der Bezugselektrode flüssigkeitsdicht abgeschlossen ist, kann das andere Ende bedarfsweise freigelegt werden. Vorteilhaft ist hier das Verschlußelement eine semipermeable Scheibe, namentlich aus Silikonkautschuk, durch die sehr kleine Luftmengen in die Kammer gelangen können, um das Entstehen von Unterdruck beim - extrem langsamen - Abfließen von in der Kammer befindlichem Elektrolyten zu verhindern. Die Anordnung stellt sicher, daß der Kontakt-Elektrolyt nicht an anderer, unzulässiger Stelle austreten kann.

Zweckmäßig wird die Kammer von einer die Kapillaröffnung aufweisenden Zuleitung abgedichtet durchsetzt. Man erzielt damit einen sehr einfachen und stabilen Aufbau. Es genügt nämlich, die Zuleitung ein aus weichelastischem PVC bestehender Schlauch ist, der mit den Kammer-Wandungen durch Dichtungen, Klebestellen o.dgl. stoffschlüssig festgelegt sein kann, vor allem mit durchmessergleichem Übergang in die Meßstrecke. Dadurch sind günstigste Strömungsverhältnisse gewährleistet, zumal ein gleichartiger Übergang auch am Auslaß vorgesehen sein kann.

Bedeutsam ist erfindungsgemäß die Bemessung der Kapillaröffnung einerseits und der Kammer andererseits jeweils im Verhältnis zum Bohrungsinnendurchmesser. Die lichte Weite der Kapillaröffnung kann weniger als 1 µm betragen.

Für die Handhabung ist ein an die Meßstrecke anschließendes schwenkbares Winkelrohr als Auslaß günstig. Wenn das Modul mit einer von den Elektroden-Anschlüssen gebildeten Steckverbindung versehen ist, namentlich an einer Breitseite des Gehäuses, läßt es sich bequem auf ein Meßgerät aufstecken, mit dem in an sich bekannter Weise nach Nullabgleich Potentialdifferenzen gemessen werden können. Verschiedene Stiftkontakte können dabei zur Codierung für spezielle Ionen-Auswahlmessungen dienen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:

Fig. 1 eine Draufsicht auf eine nicht abgedeckte Vorrichtung nach der Erfindung,

Fig. 2 eine stirnseitige Teilansicht der Vorrichtung von Fig. 1,

Fig. 3 eine Rückansicht der Vorrichtung von Fig. 1 und 2,

Fig. 4a eine Draufsicht auf einen Träger,

Fig. 4b eine Seitenansicht des Trägers von Fig. 4a,

Fig. 4c eine Stirnansicht des Trägers von Fig. 4a und 4b,

Fig. 5 eine Teilansicht eines Moduls für eine Vorrichtung nach Art von Fig. 1 bis 3,

Fig. 6 eine Teildraufsicht auf das Modul von Fig. 5 ohne Abdeckung und

Fig. 7 eine Seitenansicht, teilweise im Schnitt, einer anderen Modulausführung.

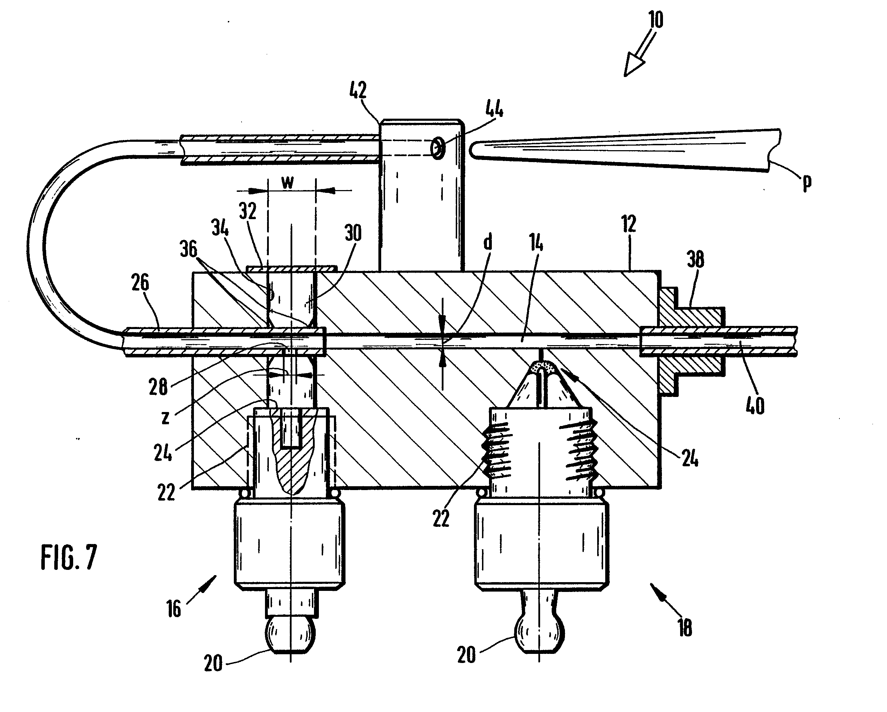

Das insgesamt mit 10 bezeichnete Analyse-Modul gemäß Fig. 7 hat ein Gehäuse 12 mit einer als Kanal ausgebildeten Meßstrecke 14, die vorzugsweise einen Innendurchmesser d von 0,5 mm hat. Von einer Gehäuseseite her reichen an die Meßstrecke 14 eine Bezugselektrode 16 und eine Meßelektrode 18 mit je einem Sondenabschnitt 24. Die Elektroden 16, 18 haben je einen Steckanschluß 20 sowie einen Gewindeteil 22. Nur eine Meßelektrode 18 ist gezeichnet, doch können auch mehrere Meßelektroden vorhanden sein. Die Elektroden 16, 18 sind dank ihres Gewindeteils 22 bequem austauschbar; als zusätzliche Abdichtung können O-Ringe an der Gehäuseaußenseite vorhanden sein.

In die Meßstrecke 14 führt eine Zuleitung 26, die bevorzugt ebenfalls den Innendurchmesser d aufweist. Gegenüber der Bezugselektrode 16 hat das in die Meßstrecke 14 übergehende Ende der Zuleitung 26 eine Kapillaröffnung 28. Deren lichte Weite z ist außerordentlich gering und vorzugsweise kleiner als 1 µm.

Das Gehäuse 12 ist im Bereich der Bezugselektrode 16 quer zu der Meßstrecke 14 von einer Bohrung oder Kammer 30 durchsetzt. Sie dient als Tank für einen Kontaktelektrolyten und hat beispielsweise einen Durchmesser w von 4 mm bei einer Länge von 9 mm. Die Bohrung 30 ist einerseits von der planen Stirnfläche der Bezugselektrode 16 abgeschlossen, andererseits von einer semipermeablen Scheibe 32, die aus Silikonkautschuk bestehen und auf die anschließende Außenwand des Gehäuses 12 geklebt sein kann. Dieses besteht bevorzugt aus Polymethylmethacrylat, während die Zuleitung 26 und ein Auslaß 40 Schläuche aus Weich-PVC sein können, vorzugsweise mit einem Außendurchmesser von 1 mm. Wo die Zuleitung 26 die Kammer 30 durchsetzt, ist sie mit deren Wandungen 34 durch Klebestellen 36 gas-und flüssigkeitsdicht verbunden. Anstatt def stoffschlüssigen Verbindungen 36 können auch Dichtungen geeigneter Gestalt vorgesehen sein. Der Auslaß 40 ist in einem Stutzen 38 des Gehäuses 12 geführt.

Die Zuleitung 26 ist an einem Ansatz 42 des Gehäuses 12 festgelegt, der eine Querbohrung mit einer Öffnung 44 aufweist. Zum Füllen des Moduls 10 mit der Meßflüssigkeit wird diese durch eine Pipette P in die Öffnung 44 eingespritzt, wie angedeutet.

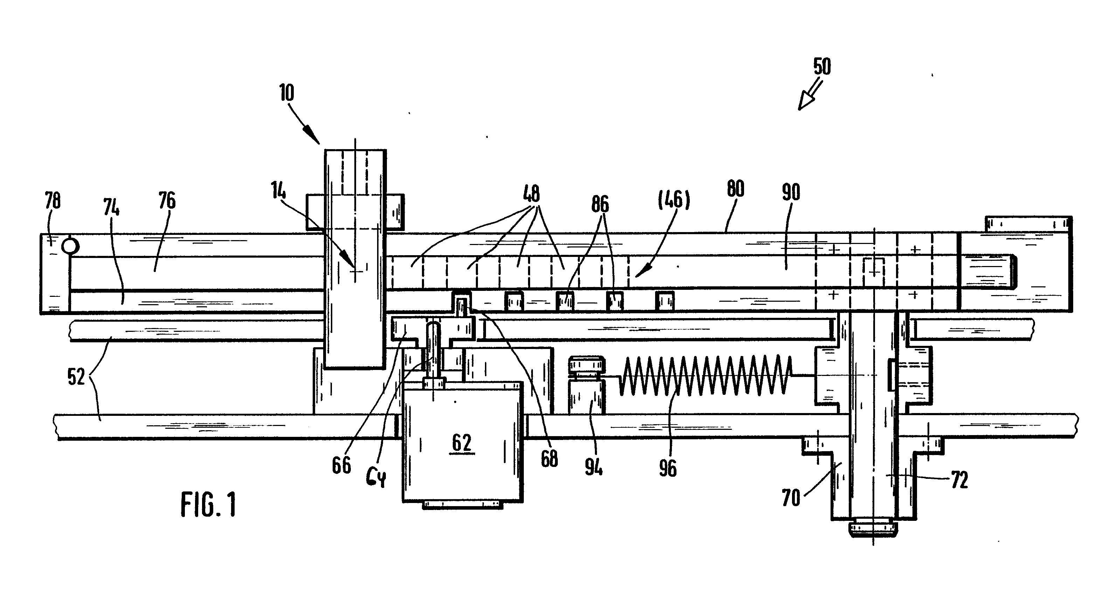

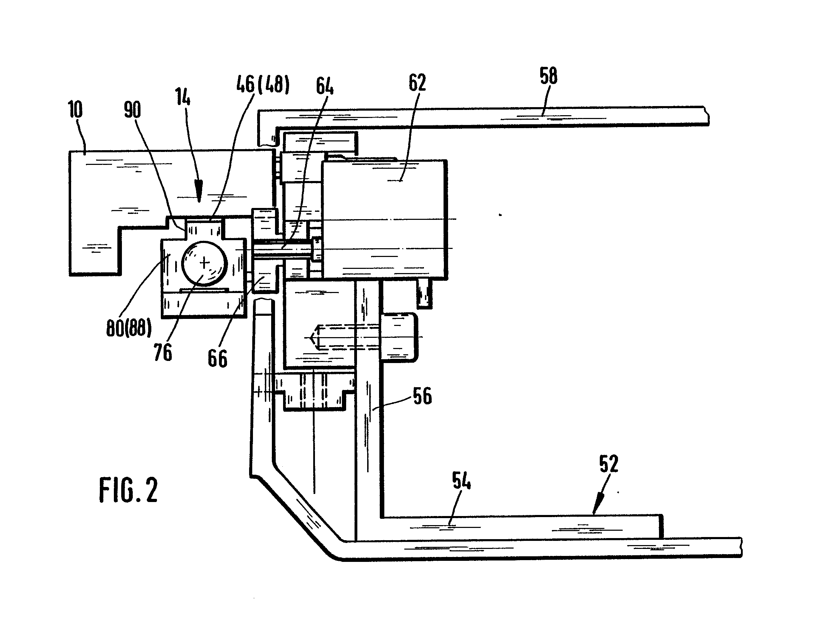

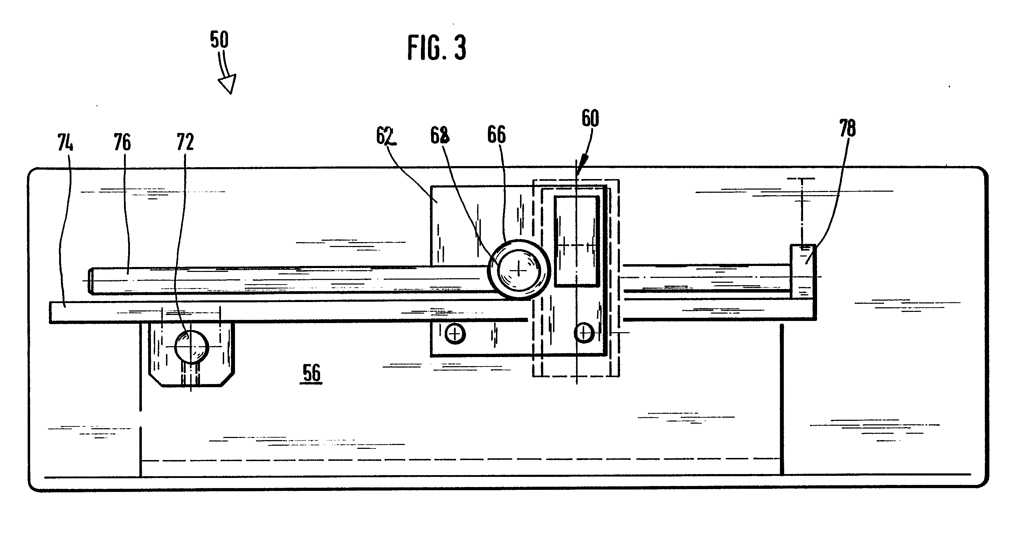

Die in Fig. 1 bis 6 dargestellte Vorrichtung ist allgemein mit 50 bezeichnet. Sie hat ein Gehäuse bzw. einen Rahmen 52 mit einer Winkelleiste 54, die eine Tragwand 56 aufweist. Ein in Fig. 2 gezeigter Aufsatz 58 ist der Deutlichkeit halber in Fig. 1 weggelassen.

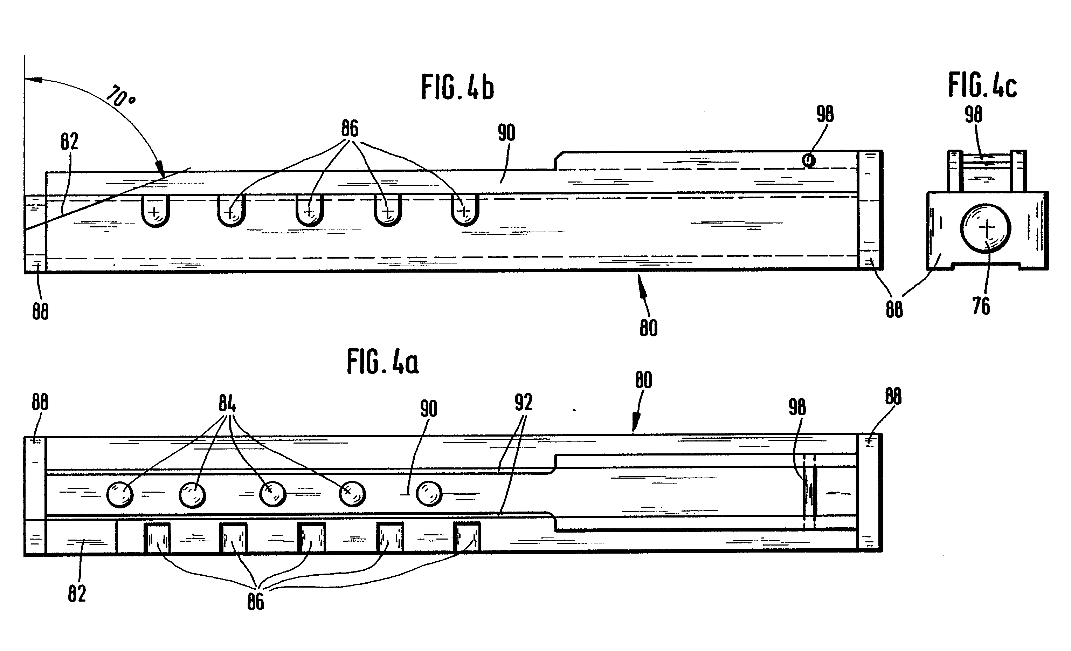

An der Tragwand 56 ist ein Motor 60 sowie ein Getriebe 62 angebracht. Die Abtriebswelle 64 des Getriebes 62 trägt eine Kurbelscheibe 66, auf der exzentrisch zu ihrer Drehachse ein Mitnehmer 68 angeordnet ist, beispielsweise ein Stehbolzen. Mit diesem Antriebssystem ist ein Träger 80 bewegbar (siehe insbesondere Fig. 4a bis 4c in Verbindung mit Fig. 1 und 2). Bevorzugt ist der Träger 80 als Schlitten ausgebildet, der auf einer Führungsschiene 74 mit einer parallel dazu angeordneten, an einem Stirnende 78 befestigten Stange 76 gleitbar beweglich ist.

Aus Fig. 4a bis 4c ist ersichtlich, daß der Träger 80 an der vorderen Stirnseite eine Rampe oder Einlauf-Schräge 82 aufweist. Allgemein hat er im Querschnitt quadratische oder rechteckige Form und ist oben mit einer mittleren Rippe 90 und seitlich mit Kehlen 92 versehen, um einen Meßstreifen 46 bequem aufbringen und abnehmen zu können, der zur Durchführung der erforderlichen Analysten mit Meßproben versehen ist. Der Streifen 46 wird durch wenigstens einen Niederhalter 98 daran gehindert, daß er sich während der Messungen von der Rippe 90 am Träger 80 abhebt. Auf dem Meßstreifen 46 ist eine Anzahl von Meßfeldern 48 angeordnet, und zwar in einer Reihe mit untereinander gleichen Abständen. Diese Felder können als Plättchen oder Kissen ausgebildet sein, um die zu analysierenden Flüssigkeiten schwammartig aufzunehmen und dabei möglichst lange feucht zu bleiben. Wahlweise oder zusätzlich ist es auch möglich, an der mittleren Rippe 90 eine Folge von Vertiefungen 84 vorzusehen, wie in Fig. 4a angedeutet ist.

An wenigstens einer Längsseite oder -kante hat der Träger 80 Ausnehmungen 86, beispielsweise in Form von Kerben, die nacheinander von dem Mitnehmer 68 erfaßt werden, wenn die Kurbelscheibe 66 umläuft. Außerdem ist der Träger 80 mit einer Welle 72 starr verbunden, die quer dazu verläuft und in einem Lager 70 am Rahmen 52 gehalten ist. Am letzteren ist auch ein Stehbolzen 94 vorhanden, an dem ein Ende einer Feder 96 festlegbar ist, deren anderes Ende an der Welle 72 und mithin am Träger 80 angreift.

Man erkennt, daß der Träger 80 um seine Welle 72 im Lager 70 schwenkbar ist, so daß sein Hauptteil sich gegenüber dem Rahmen 52 absenkt. Die Absenkung sowie ein nachfolgender Vorschub wird durch das Kurbel-Mitnehmersystem 66/68 und die Kerben 86 am Träger 80 bewirkt. Eine Rückbewegung erfolgt durch Umkehr des Drehsinns der Kurbelscheibe 66, also durch Umsteuerung des Motors 60 bzw. des Getriebes 62.

Da die Vorrichtung 50 ein Modul 10 in solcher Anordnung aufweist, daß seine Meßstrecke 14 nach unten gerichtet ist, wird der auf der Rippe 90 des Trägers 80 befindliche Meßstreifen 46 zum Abheben von der Meßstrecke 14 abgesenkt. Wenn dann der Träger 80 vor-oder zurückbewegt wird, hebt sich eines der Meßfelder 48 an die Meßstrecke 14 heran, an die es schließlich von unten angedrückt wird. Nun kann die gewünschte Messung durchgeführt werden.

Vorzugsweise sind die Meßfelder 48 so verteilt, daß in jeder Richtung auf ein trockenes Meßfeld ein feuchtes folgt. Zweckmäßig hat man zunächst ein neutralisierendes Meßfeld, dann ein trockenes, anschließend ein feuchtes Meßfeld mit einem ersten Standard, sodann ein trockenes Meßfeld und als letztes in der Reihe ein weiteres feuchtes Meßfeld mit einem zweiten Standard. Sobald die Vorrichtung 50 durch einen Meßstreifen 46 in dieser Reihenfolge kalibriert ist, bedient man sich weiterer Meßstreifen 46 für die Messung jeweils einer speziellen Ionen-Art. Zur Sicherheit der Analyse wird es dabei bevorzugt, einen Nullabgleich jeweils am ersten und dritten Meßfeld durchzuführen, während das zweite und vierte Meßfeld trocken sind, um eine Verschleppung von Flüssigkeitsresten weitestgehend zu unterbinden. Auf dem fünften Meßfeld findet dann die tatsächliche Probenmessung statt.

Die Andruckkraft, mit der jedes einzelne Meßfeld 48 an die Meßstrecke 14 gepreßt wird, kann nach Bedarf justiert werden, beispielsweise durch Spannen oder Austauschen der Feder 96.

Zweckmäßig wird das Antriebssystem mit Stell- und Signaleinrichtungen versehen, um zu gewährleisten, daß nach jedem Bewegungsvorgang des Trägers 80 von der Kurbelscheibe 66 und daher von dem Mitnehmer 68 die gleiche Ausgangsposition wiedereingenommen wird. Lichtschranken am Umfang der Kurbelscheibe 66 können vorteilhaft eingesetzt werden, um deren definierte Ausgangsstellung jedesmal anzusteuern.

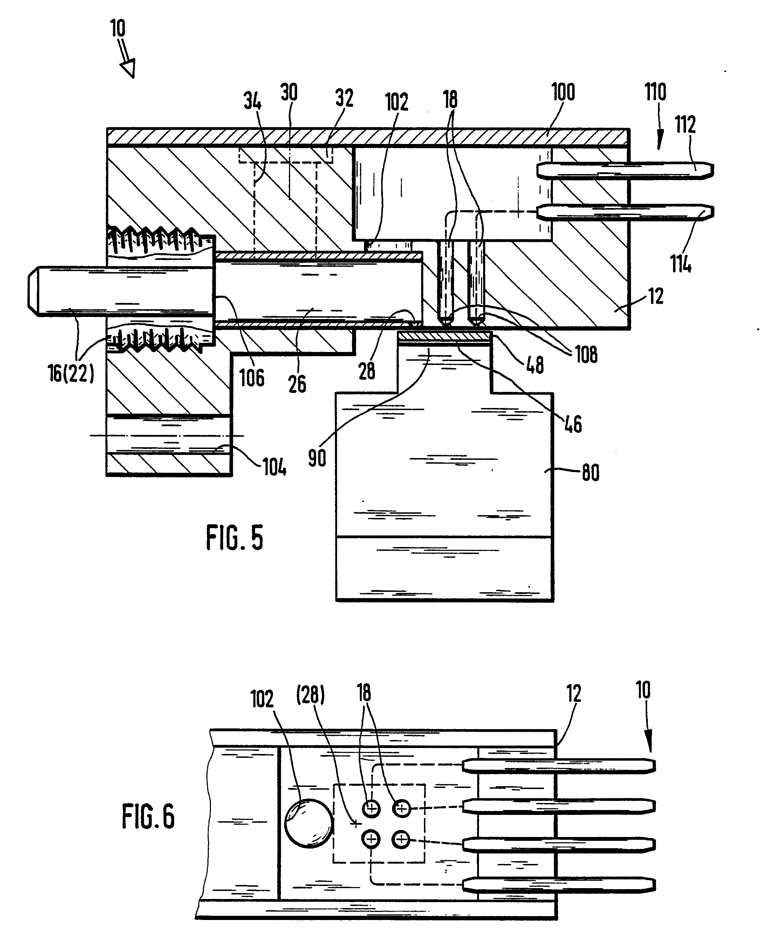

Spezielle Merkmale einer anderen Modul-Ausgestaltung gehen aus Fig. 5 und 6 hervor. Der Körper 12 des hier dargestellten Moduls 10 ist durch eine Abdeckung 100 verschlossen. Zum Druckausgleich ist ein Fenster 102 an demjenigen Ende der Zuleitung 26 vorgesehen, das sich nahe den Meßelektroden 18 befindet, die hier in einer Gruppe verwendet werden. Sie sind mit einem Vielfach-Steckverbinder 110 verbunden, der eine obere Stiftreihe 112 für die Codierung und Auswahl der einzelnen zu analysierenden Ionen-Arten und außerdem eine untere Stiftreihe 114 aufweist, an der die Signalspannungen der gewählten Elektroden auftreten. Zur Auswahl kann man sich eines (nicht dargestellten) Tastenwahlblocks bedienen.

Zur Befestigung des Moduls 10 ist eine Zentrierbohrung 104 vorteilhaft, so daß der Steckerstift der Bezugselektrode 16 und ein (nicht gezeichneter) Führungsstift, welcher in die Zentrierbohrung 104 paßt, zur sicheren Befestigung des Moduls 10 gleichzeitig einsteckbar sind.

Fig. 5 zeigt ferner eine Polfläche 106 der Bezugselektrode 16, die mithin von der als dünnes Abdichtelement ausgebildeten Polfläche 106 abgeschlossen ist. Vorzugsweise besteht die Bezugselektrode 16 aus einem Ag/AgCl-System.

Alternativ kann statt des oben genannten Fensters 102 eine Kammer 30 mit einem Verschluß 32 und Wandungen 34 vorgesehen sein, und zwar in der mit gepunkteten Linien in Fig. 5 angedeuteten Anordnung, so daß ein separates Fenster 102 entbehrlich ist. Man kann ein solches aber auch beibehalten, wenn das verfügbare Behältervolumen vergrößert werden soll.

Man erkennt, daß die Meßelektroden 18 unten verengte Enden haben, die als Düsen 108 ausgebildet sein können (Fig. 5). Dies trägt dazu bei, Verschleppungsfehler zu vermeiden. Außerdem können die sensitiven Querschnitte dadurch erheblich verringert werden, ohne die sichere Funktion irgendwie zu beeinträchtigen. Die räumliche Trennung der Meßstellen wird zugleich weiter verbessert.

Wichtige Vorteile der Erfindung beruhen darauf, daß das Gerät 50 und die Module 10 einen mobilen, patientennahen Einsatz beispielsweise am Krankenbett erlauben, was mit herkömmlichen Analysegeräten wegen ihrer Unhandlichkeit und ihres hohen Gewichts nicht möglich ist. Die Herstellungskosten der erfindungsgemäßen Vorrichtung sind dementsprechend erheblich niedriger.

Während die Industriegeräte jeweils große Probenvolumine erfordern und daher nur diskontinuierlich verwendbar sind, eignet sich das Analysegerät nach der Erfindung auch zum kontinuierlichen Einsatz. Für die Einzelprobenanalyse reicht dabei eine Probenmenge von nur 5 bis 30 µl.

Zu beachten ist, daß die Vorrichtung und das Modul nach der Erfindung dem Arzt vor Ort einen klinisch relevanten Laborbefund ermöglichen, auf dem eine Präsenzdiagnostik aufbauen kann. Infolgedessen kann ärztlicherseits neben der Anamnese sofort auch eine Therapieentscheidung getroffen werden. Überdies eignet sich das Gerät für Kliniken mit geringerer finanzieller Ausstattung und zur Verwendung fernab von externer Energieversorgung, was für den Einsatz in Entwicklungsländern von Bedeutung sein kann. Neben Schnellanalysen ist auch die Verwendung für Forschungszwecke möglich. Außerdem ist das Gerät über ein Interface ohne größeren Aufwand an alle marktgängigen Mikrocomputer anschließbar.

Mit dem Modul 10 kann eine Vielzahl von organischen und anorganischen Stoffen analysiert werden. Dazu genügt es, das Grundgerät mit geeigneten Sensoren auszurüsten, wobei die Bestückung mit neuen Meßelektroden jederzeit mühelos möglich ist. Schon ein kleines Sensor-Sortiment kann unter Umständen ein Großlabor ersetzen. Die Bestimmung aller wichtigen Ionen wie z.B. $Na^+$, $K^+$, $Ca^{++}$, $Mg^{++}$, $Li^+$, $H^+$ ($p_H$), $Cl^-$ usw. ist problemlos möglich. Aufgrund der geringen Probenmenge genügt beispielsweise die Blutabnahme durch Stich ins Ohrläppchen oder in die Fingerbeere.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Legende PA 529 EP

     d Innendurchmesser (von 14)
     P Pipette
     w lichte Weite (von 30)
     z lichte Weite (von 28)
     10 (Analyse-)Modul
     12 Körper
     14 Meßstrecke (Kanal)
     16 Bezugselektrode
     18 Meßelektrode
     20 Steckanschluß
     22 Gewindeteil
     24 Sondenabschnitt
     26 Zuleitung
     28 Kapillaröffnung
     30 Kammer (Bohrung)
     32 Verschluß (Scheibe)
     34 Wandungen
     36 Klebestellen (Dichtungen)
     38 Stutzen
     40 Auslaß
     42 Ansatz
     44 Öffnung
     46 (Meß-)Streifen
     48 Meßfelder, -plättchen, -kissen

50 Vorrichtung
52 Gehäuse / Rahmen
54 Winkelleiste
56 Tragwand
58 Aufsatz
60 Motor
62 Getriebe
64 (Abtriebs-)Welle
66 Kurbelscheibe
68 Mitnehmer(bolzen)
70 Lager
72 Welle
74 Führungsschiene
76 Stange
78 Stirnende (Scheibe)
80 Schlitten / Träger
82 Rampe (Einlauf-Schräge)
84 Vertiefungen
86 Ausnehmungen (Kerben)
88 Kappen
90 Rippe
92 Kehlen
94 Stehbolzen
96 Feder
98 Niederhalter
100 Abdeckung
102 Fenster
104 Zentrierbohrung
106 Elektroden-Polfläche
108 Düsen-Enden
110 Vielfach-Steckverbinder
112 obere Stiftreihe
114 untere Stiftreihe

**Ansprüche**

1. Vorrichtung zur elektrochemischen Analyse von Flüssigkeiten wie Vollblut, Serum u.dgl., mit einem Gehäuse (52), das wenigstens ein Meßmodul (10) mit einer als Kanal oder Bohrung ausgebildeten Meßstrecke (14) sowie mit einer Bezugselektrode (16) und wenigstens einer Meßelektrode (18) aufweist, dadurch **gekennzeichnet**, daß ein Meßfelder-Träger (80, 46) quer zu seiner Hauptausdehnung an die Meßstrecke (14) des Meßmoduls (10) gesteuert heranführbar sowie daran andrückbar ist und daß der Träger (80) von der Meßstrecke bei abgehobenen Meßfeldern (48) vor-und zurückbewegbar ist.

2. Vorrichtung nach Anspruch 1, dadurch **gekennzeichnet**, daß das Meßmodul (10) oberhalb des Trägers (80) überkopf zu diesem angeordnet ist.

3. Vorrichtung nach Anspruch 1 oder 2, **gekennzeichnet** durch elektromechanische und/oder elektromagnetische Mittel zum Bewegen des Trägers (80).

4. Vorrichtung nach einem der Ansprüche 1 bis 3, dadurch **gekennzeichnet**, däß an einem Rahmen (52) eine entgegen Federkraft verschwenkbare Führungsschiene (74) gelagert ist, die den als - schrittweise verschieblicher Schlitten ausgebildeten Träger (80) führt, mittels dessen Meßfelder (48) eines darauf aufgesetzten Streifens (46) einzeln an bzw. unter das Meßmodul (10) verfahrbar sind.

5. Vorrichtung nach Anspruch 4, dadurch **gekennzeichnet**, daß der Schlitten (80) an seinen Enden Kappen (88) aufweist, die auf einer zu der Führungsschiene (74) parallelen Stange (76) gleitbeweglich sind.

6. Vorrichtung nach Anspruch 4 oder 5, dadurch **gekennzeichnet**, daß am Schlitten (80) seitliche Ausnehmengen (86) vorgesehen sind, in die ein Mitnehmer (68) eines motorisch angetriebenen Kurbeltriebs (66) kraft-und/oder formschlüssig eingreift.

7. Vorrichtung nach Anspruch 6, dadurch **gekennzeichnet**, daß am Umfang der Kurbel (66) Stellungsgeber für eine definierte Ausgangsstellung vorhanden sind.

8. Vorrichtung nach wenigstens einem der Ansprüche 1 bis 7, dadurch **gekennzeichnet**, daß der Träger 80) einen inerten Streifen (46) aufweist, auf dem eine Reihe von in Abständen angeordneten, zur Adsorption einer Probenflüssigkeit geeigneten Meßfeldern (48) angeordnet ist.

9. Vorrichtung wenigstens nach Anspruch 4 und 8, dadurch **gekennzeichnet**, daß der Schlitten (80) wenigstens einen Niederhalter (98) für den Streifen (46) oder für eines seiner Enden aufweist.

10. Meßmodul (10) insbesondere für eine Vorrichtung nach wenigstens einem der Ansprüche 1 bis 9, wobei die Elektroden (16, 18) jeweils einen Anschluß (20) sowie einen Gewindeteil (22) aufweisen und mit einem Sondenabschnitt (24) an bzw. in die Meßstrecke reichen, dadurch **gekennzeichnet**, daß im Meßmodul (10) zumindest eine verschließbare Kammer (30) vorhanden ist, die an die Meßstrecke (14) heranreicht und über eine Kapillaröffnnng (28) mit deren Innerem in Verbindung steht.

11. Modul nach Anspruch 10, dadurch **gekennzeichnet**, daß die Kammer (30) im Bereich einer Elektrode (16), insbesondere quer zu der Meßstrecke (14), angeordnet und von einer die Kapillaröffnung (28) aufweisenden Zuleitung (26) abgedichtet durchsetzt ist.

12. Modul nach Anspruch 10 oder 11, dadurch **gekennzeichnet**, daß die Kammer (30) eine die Meßstrecke (14) kreuzende, beidseitig verschlossene Bohrung ist.

13. Modul nach einem der Ansprüche 10 bis 12, dadurch **gekennzeichnet**, daß die Kammer (30) einerseits von einer Elektrode, bevorzugt der Bezugselektrode (16), und andererseits von einem Verschlußelement (32) flüssigkeitsdicht abgeschlossen ist, bevorzugt von einer semipermeablen Scheibe aus Silikonkautschuk.

14. Modul nach einem der Ansprüche 11 bis 13, dadurch **gekennzeichnet**, daß die Zuleitung (26) ein Schlauch ist, insbesondere aus weichelastischem Material wie Polyvinylchlorid, der an den Wandungen (34) der Kammer (30) stoffschlüssig festgelegt ist, und daß am Übergang zwischen der Zuleitung (26) und den Kammerwandungen (34) Dichtungen, Klebestellen (36) o.dgl. vorhanden sind.

15. Modul nach wenigstens einem der Ansprüche 11 bis 14, dadurch **gekennzeichnet**, daß die Zuleitung (26) mit ihrem die Kammer (30) durchsetzenden Ende unmittelbar in die Meßstrecke (14) übergeht, namentlich durchmessergleich.

16. Modul nach wenigstens einem der Ansprüche 10 bis 15, dadurch **gekennzeichnet**, daß die lichte Weite (z) der Kapillaröffnung (28) höchstens ein Zehntel des Kanal-Innendurchmessers (d) beträgt, vorzugsweise weniger als ein Hundertstel davon.

17. Modul nach wenigstens einem der Ansprüche 10 bis 16, **gekennzeichnet** durch solche Bemessung der Kapillaröffnung (28), daß die Ausflußrate von in der Kammer (30) befindlichem Elektrolyten bei Umgebungsdruck und Raumtemperatur kleiner als 0,1 $\mu$l/24 h ist.

18. Modul nach wenigstens einem der Ansprüche 10 bis 17, dadurch **gekennzeichnet**, daß die lichte Weite (w) der Kammer (30) etwa zehnmal so groß ist wie der Innendurchmesser (d) des Kanals (14), der höchstens 1,0 mm beträgt, vorzugsweise etwa 0,5 mm.

19. Vorrichtung nach wenigstens einem der Ansprüche 1 bis 18, dadurch **gekennzeichnet**, daß ein an die Meßstrecke (14) anschließender Auslaß (40) als schwenkbares Winkelrohr ausgebildet oder mit einem solchen versehen ist.

20. Vorrichtung nach wenigstens einem der Ansprüche 1 bis 19, dadurch **gekennzeichnet**, daß sie mit einer Steckverbindung (110) versehen ist, die von den Elektroden-Anschlüssen (20) gebildet oder mit ihnen verbunden und die an einer Breitseite des Gehäuses (12) oder des Rahmens (52) angeordnet ist.

FIG.1

50

10

14

78

74

76

48

86

90

80

(46)

96

94

68

62

64

66

70

72

52

FIG. 2

0 287 054

## FIG. 3

FIG.4c

FIG.4b

FIG.4a

FIG. 5

FIG. 6

FIG. 7